# FASCICULE DE BREVET EUROPEEN

(11) **EP 3 483 069 B1**
(45) Date de publication et mention de la délivrance du brevet: **18.03.2020**
(21) Numéro de dépôt: 18200083.6
(22) Date de dépôt: 12.10.2018
(51) Int. Cl.: B64D 27/26

(54) **SYSTEME D'ATTACHE MOTEUR D'AERONEF**
LUFTFAHREZUGTRIEBWERKSBEFESTIGUNGSSYSTEM
AIRCRAFT ENGINE ATTACHMENT SYSTEM

(30) Priorité: 08.11.2017 FR 1760467
(43) Date de publication de la demande: 15.05.2019
(73) Titulaire: AIRBUS OPERATIONS (S.A.S.), 31060 Toulouse (FR)
(72) Inventeur: DEFORET, Thomas, 31300 TOULOUSE (FR); SOULIE, Adeline, 82600 VERDUN SUR GARONNE (FR); COMBES, Stéphane, 31660 BUZET SUR TARN (FR); GELIOT, Jean, 31400 TOULOUSE (FR); ORTEU, Benoit, 31000 TOULOUSE (FR)
(74) Mandataire: Gicquel, Olivier Yves Gérard

(56) Documents cités:
- EP-A1- 1 928 740
- FR-A1- 3 065 442
- US-A1- 2015 166 188

## Description

La présente invention concerne un système d'attache moteur d'un moteur d'aéronef ainsi qu'un aéronef comportant au moins un tel système d'attache moteur.

Un aéronef comporte classiquement au moins un moteur, en particulier un turboréacteur. Sous chaque aile et pour chaque moteur, l'aéronef comporte un mât réacteur qui est fixé à la structure de l'aile et qui s'étend en-dessous de l'aile et le moteur est suspendu sous le mât réacteur.

Le moteur est fixé au mât réacteur par l'intermédiaire d'un système d'attache moteur comprenant une attache moteur avant et une attache moteur arrière.

L'attache moteur avant comporte classiquement une poutre fixée sous le mât réacteur et deux bielles fixées entre la poutre et une partie avant du moteur.

Chaque bielle et la poutre définissent en combinaison un chemin primaire d'efforts entre le moteur et le mât réacteur pour supporter les charges du moteur dans des conditions normales de fonctionnement dudit moteur.

Actuellement, le diamètre des moteurs a tendance à augmenter et la fixation du moteur sous le mât réacteur peut être un frein à l'accroissement dudit diamètre pour des raisons d'encombrement. Il est connu, par exemple par le document EP 1 928 740, un système d'attache moteur dont l'attache moteur avant est implantée sur une face frontale du mât, ce qui permet un gain de place. Un tel système d'attache moteur n'est donc pas limitant pour les dimensions du moteur.

Un des objectifs de la présente invention est de trouver une solution alternative au système d'attache moteur du type décrit ci-dessus.

A cet effet, est proposé un système d'attache moteur pour un moteur d'un aéronef tel que revendiqué dans la revendication 1.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue de côté d'un aéronef selon l'invention,
la Fig. 2 est une vue en perspective éclatée d'un mât réacteur selon un mode de réalisation de l'invention.
la Fig. 3 est une vue en perspective d'un système d'attache moteur selon l'invention, ledit système comprenant un mât moteur et une attache moteur avant fixée au mât moteur via une pièce intermédiaire,
la Fig. 4 est une vue de face de l'attache moteur avant telle que représentée à la Fig. 3, selon un mode de réalisation de l'invention,
la Fig. 5 est une vue en perspective d'une attache moteur avant et d'une pièce intermédiaire selon un mode de réalisation de l'invention,
la Fig. 6 est une vue de derrière et en coupe de la pièce intermédiaire selon un premier mode de réalisation de l'invention, et
la Fig. 7 est une vue de derrière et en coupe de la pièce intermédiaire selon un deuxième mode de réalisation de l'invention.

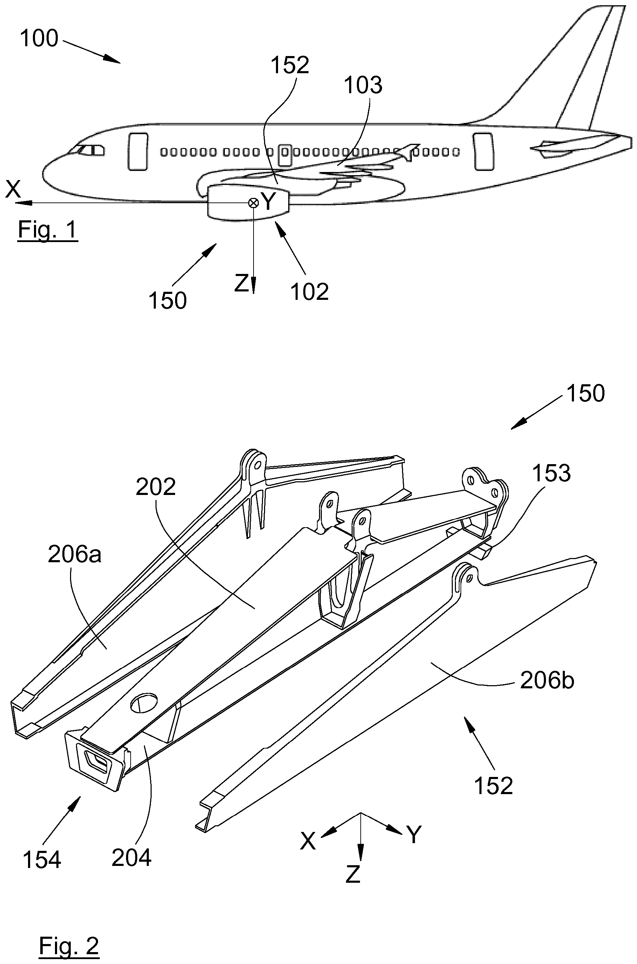

Dans la description qui suit, les termes relatifs à une position sont pris en référence à un aéronef en position d'avancement, c'est-à-dire comme il est représenté sur la Fig. 1.

La Fig. 1 montre un aéronef 100 qui présente un moteur 102, en particulier un turboréacteur.

Dans la description qui suit, et par convention, on appelle X l'axe longitudinal du moteur 102 orienté positivement dans le sens d'avancement de l'aéronef 100, on appelle Y la direction transversale du moteur 102 qui est horizontale lorsque l'aéronef est au sol, et Z la direction verticale ou hauteur verticale lorsque l'aéronef est au sol, ces trois directions X, Y et Z étant orthogonales entre elles.

Dans le mode de réalisation de l'invention présenté sur la Fig. 1, l'aéronef 100 comporte un moteur 102 sous chaque aile 103, mais il est possible de prévoir plusieurs moteurs sous chaque aile 103.

Sous chaque aile 103 et pour chaque moteur 102, l'aéronef 100 présente un système d'attache moteur 150 qui est fixé à la structure de l'aile 103 et s'étend sous l'aile 103 et supporte la partie avant du moteur 102.

En référence avec les Figs. 2, 3 et 4, le système d'attache moteur 150 comprend un mât réacteur 152 fixé à l'aile 103 et une attache moteur avant 154 fixée au mât réacteur 152 et à laquelle est fixée la partie avant du moteur 102, et une attache moteur arrière 153 (non décrite car ne faisant pas partie de l'invention) fixée au mât réacteur 152 et à laquelle est fixée une partie intermédiaire ou arrière du moteur 102.

De manière connue, le mât réacteur 152 prend la forme d'un caisson qui comporte une paroi supérieure 202, une paroi inférieure 204 et de chaque côté, une paroi latérale 206a-b. Ces différentes parois 202, 204 et 206a-b sont fixées les unes aux autres pour former le mât réacteur 152.

Le mât réacteur 152 présente au niveau de sa partie avant, une face frontale qui est délimitée par les différentes parois 202, 204 et 206a-b du mât réacteur 152 et qui s'étend dans un plan sensiblement vertical.

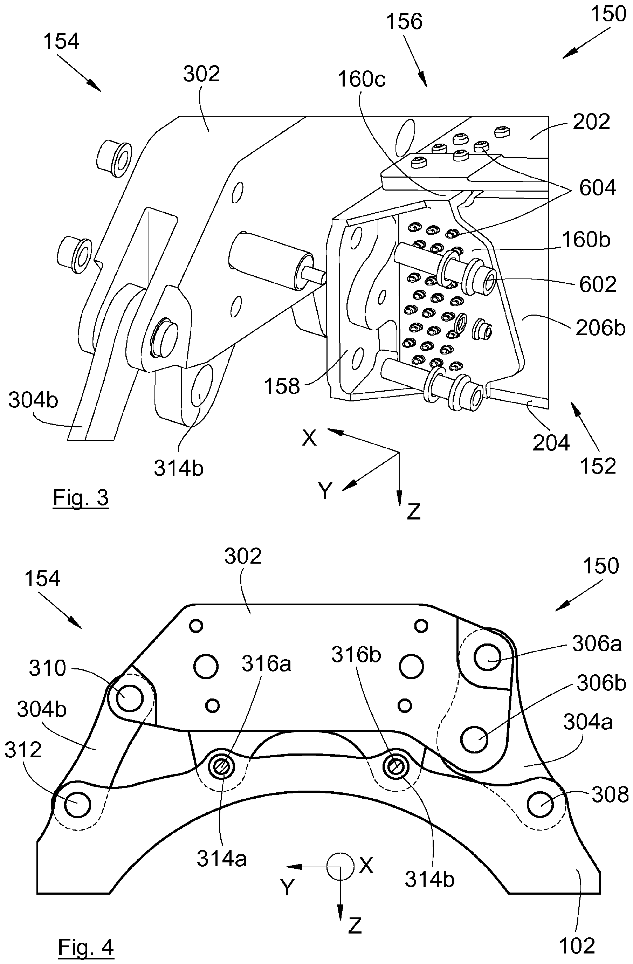

En référence avec les Figs. 3 et 4, l'attache moteur avant 154 comporte une poutre 302 à laquelle est fixée de part et d'autre d'un plan médian XZ, une bielle 304a-b.

Chaque bielle 304a-b est fixée de manière articulée par une de ses extrémités à la poutre 302 et est fixée de manière articulée par l'autre de ses extrémités à une partie avant du moteur 102.

Selon l'invention, le système d'attache moteur 150 comporte également une pièce intermédiaire 156 qui prend la forme d'une cuvette avec une paroi de fond 158 et quatre parois latérales 160a-d qui s'étendent autour de la paroi de fond 158.

En référence avec la Fig. 3, la poutre 302 se fixe contre une face extérieure de la paroi de fond 158, ici à l'aide de boulons 602. La face extérieure de la paroi de fond 158 est la face qui est orientée vers l'avant de l'aéronef 100.

La pièce intermédiaire 156 s'emboîte au niveau de la face frontale du mât réacteur 152 de manière à ce qu'une face intérieure de la paroi de fond 158 vienne contre la face frontale du mât réacteur 152, qu'une première paroi latérale 160a de la pièce intermédiaire 156 vienne en appui contre une paroi latérale 206a du mât réacteur 152, qu'une deuxième paroi latérale 160b de la pièce intermédiaire 156 vienne en appui contre l'autre paroi latérale 206b du mât réacteur 152, qu'une troisième paroi latérale 160c de la pièce intermédiaire 156 vienne en appui contre la paroi supérieure 202 du mât réacteur 152, et qu'une quatrième paroi latérale 160d de la pièce intermédiaire 156 vienne en appui contre la paroi inférieure 204 du mât réacteur 152.

La face intérieure de la paroi de fond 158 est la face opposée à la face extérieure, c'est-à-dire la face qui est orientée vers l'arrière de l'aéronef 100.

Chaque paroi latérale 160a-d de la pièce intermédiaire 156 est parallèle à la paroi 202, 204, 206a-b associée du mât réacteur 152.

Chaque paroi latérale 160a-d de la pièce intermédiaire 156 et de la paroi 202, 204, 206a-b associée du mât réacteur 152 sont fixées l'une à l'autre, ici à l'aide de boulons 604.

Un tel agencement permet de disposer la poutre 302 au niveau de la partie avant du mât réacteur 152 d'où un gain de place par rapport à une position sous le mât réacteur 152. En outre, la forme particulière de la pièce intermédiaire 156 permet de garantir une bonne rigidité de la partie avant du mât réacteur 152 et la bonne transmission des efforts de la poutre 302 vers le mât réacteur 152.

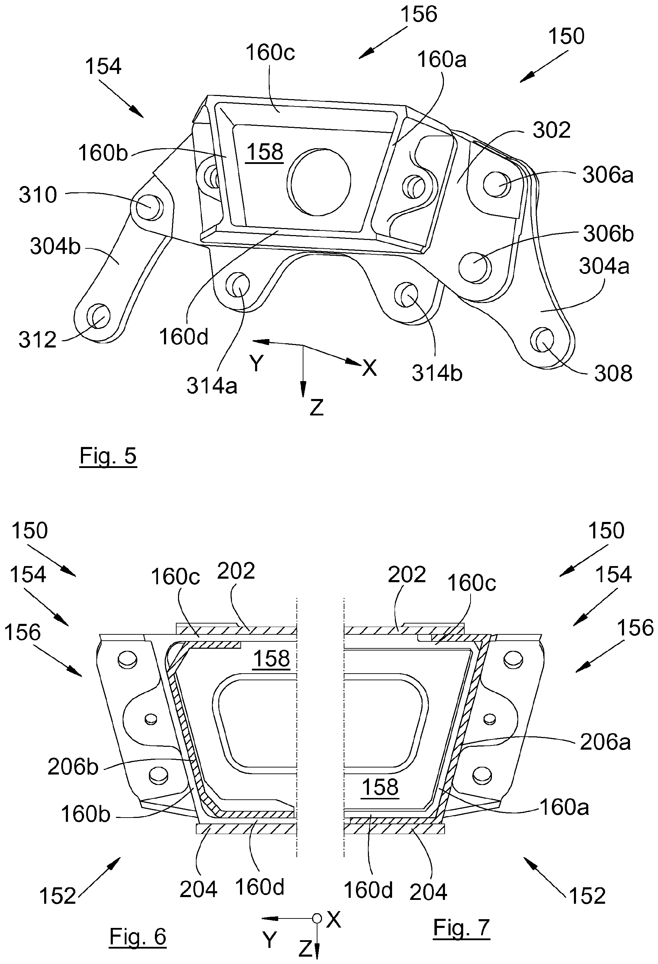

La Fig. 6 montre un premier assemblage particulier de la pièce intermédiaire 156 sur le mât réacteur 152 et la Fig. 7 montre un deuxième assemblage particulier de la pièce intermédiaire 156 sur le mât réacteur 152.

Dans le premier et le deuxième assemblage, chaque paroi latérale 206a-b du mât réacteur 152 prend la forme d'un U ouvert vers l'intérieur du mât réacteur 152. Chaque paroi latérale 206a-b du mât réacteur 152 comporte ainsi un fond qui constitue la paroi latérale, un premier rabat qui s'étend parallèlement à la paroi supérieure 202 et un deuxième rabat qui s'étend parallèlement à la paroi inférieure 204.

Dans le premier assemblage, chaque paroi latérale 206a-b du mât réacteur 152 se positionne à l'intérieur de la cuvette, c'est-à-dire entre les parois latérales 160a-d de la pièce intermédiaire 156, tandis que la paroi supérieure 202 et la paroi inférieure 204 se plaquent à l'extérieur contre les parois latérales 160c-d de la pièce intermédiaire 156.

Dans le deuxième assemblage, chaque paroi latérale 206a-b du mât réacteur 152 se positionne à l'extérieur de la cuvette, c'est-à-dire à l'extérieur des parois latérales 160a-d de la pièce intermédiaire 156, tandis que la paroi supérieure 202 se plaque à l'extérieur contre la troisième paroi latérale 160c de la pièce intermédiaire 156 et le premier rabat, et la paroi inférieure 204 se plaque à l'extérieur contre le deuxième rabat.

Dans ce mode de réalisation, le premier rabat est plus court que la moitié de la troisième paroi latérale 160c de la pièce intermédiaire 156 en regard pour permettre la mise en appui de la paroi supérieure 202 à la fois contre le premier rabat et la paroi latérale 160c de la pièce intermédiaire 156.

Dans le mode de réalisation de l'invention présenté ici, la première bielle 304a est fixée par deux points de liaison 306a-b à la poutre 302 et par un point de liaison 308 au moteur 102, et la deuxième bielle 304b est fixée par un point de liaison 310 à la poutre 302 et par un point de liaison 312 au moteur 102.

Pour chaque bielle 304a-b, chaque point de liaison à la poutre 302 et au moteur 102 est constitué par une chape réalisée, respectivement dans la poutre 302 et le moteur 102, par un alésage traversant la bielle 304a-b et par un axe de cisaillement, par exemple simple, qui traverse la chape et s'emmanche dans l'alésage de la bielle à travers une liaison rotule.

Chaque bielle 304a-b, la poutre 302, et la pièce intermédiaire 156 définissent en combinaison un chemin primaire d'efforts entre le moteur 102 et le mât réacteur 152 pour supporter les charges du moteur 102 dans des conditions normales de fonctionnement dudit moteur 102.

Pour une meilleure sécurité, l'attache moteur avant 154, et plus particulièrement la poutre 302, comporte, pour chaque bielle 304a-b, un point de liaison supplémentaire 314a-b. Les points de liaison supplémentaires 314a-b sont disposés de part et d'autre du plan médian XZ, et chacun assure une liaison supplémentaire entre la poutre 302 et le moteur 102. Chaque point de liaison supplémentaire 314a-b prend la forme d'un point de fixation de sécurité en attente (dit « waiting fail-safe » en langue anglo-saxonne) qui compensera une défaillance du chemin primaire d'efforts, c'est-à-dire d'au moins une des bielles 304a-b. C'est-à-dire que lorsqu'un composant du chemin primaire d'efforts est endommagé, l'activation d'un point de fixation de sécurité en attente crée un chemin auxiliaire d'efforts entre le moteur 102 et le mât réacteur 152.

La mise en place de deux points de fixation de sécurité en attente 314a-b permet d'assurer une meilleure sécurité, et la mise en place de part et d'autre du plan médian XZ de chacun d'eux permet d'éloigner les points de fixation de sécurité en attente 314a-b du plan médian, ce qui facilite l'accès par un technicien à chacun de ces points de fixation de sécurité en attente 314a-b. En effet, lorsqu'il y a un seul point de fixation de sécurité en attente, il se situe dans le plan médian XZ, c'est-à-dire ici juste au-dessous du mât réacteur 152 qui est particulièrement difficile d'accès.

Chaque point de fixation de sécurité en attente 314a-b est constitué par exemple d'une chape réalisée dans le moteur 102 et d'un axe 316a-b emmanché dans ladite chape et qui traverse un alésage de la poutre 302 dont le diamètre est supérieur au diamètre de l'axe 316a-b. Ainsi, en fonctionnement normal, il n'y a aucun contact entre l'axe 316a-b et la poutre 302, et en cas de rupture de l'une des bielles 304a-b, le moteur 102 va se déplacer et l'axe 316a-b vient alors en contact avec la poutre 302.

## Revendications

1. Système d'attache moteur (150) pour un moteur (102) d'un aéronef (100), le système d'attache moteur (150) comportant :
- un mât réacteur (152) comportant une paroi supérieure (202), une paroi inférieure (204) et de chaque côté, une paroi latérale (206a-b), qui délimitent ensemble une face frontale au niveau de la partie avant du mât réacteur (152), et
- une attache moteur avant (154) comportant une poutre (302) à laquelle est fixée de part et d'autre d'un plan médian, une bielle (304a-b), où chaque bielle (304a-b) est fixée de manière articulée par une de ses extrémités à la poutre (302) et est destinée à être fixée de manière articulée par l'autre de ses extrémités au moteur (102),
- une pièce intermédiaire (156) qui prend la forme d'une cuvette avec une paroi de fond (158) et quatre parois latérales (160a-d) qui s'étendent autour de la paroi de fond (158),
où la poutre (302) se fixe contre une face extérieure de la paroi de fond (158), où la pièce intermédiaire (156) s'emboîte au niveau de la face frontale du mât réacteur (152) de manière à ce qu'une face intérieure de la paroi de fond (158) vienne contre la face frontale du mât réacteur (152), qu'une première paroi latérale (160a) de la pièce intermédiaire (156) vienne en appui contre une paroi latérale (206a) du mât réacteur (152), qu'une deuxième paroi latérale (160b) de la pièce intermédiaire (156) vienne en appui contre l'autre paroi latérale (206b) du mât réacteur (152), qu'une troisième paroi latérale (160c) de la pièce intermédiaire (156) vienne en appui contre la paroi supérieure (202) du mât réacteur (152), qu'une quatrième paroi latérale (160d) de la pièce intermédiaire (156) vienne en appui contre la paroi inférieure (204) du mât réacteur (152), et où chaque paroi latérale (160a-d) de la pièce intermédiaire (156) et la paroi (202, 204, 206a-b) associée du mât réacteur (152) sont fixées l'une à l'autre,
le système d'attache moteur (150) étant **caractérisé en ce que** chaque paroi latérale (206a-b) du mât réacteur (152) prend la forme d'un U ouvert vers l'intérieur du mât réacteur (152) et comportant un fond qui constitue la paroi latérale, un premier rabat qui s'étend parallèlement à la paroi supérieure (202) et un deuxième rabat qui s'étend parallèlement à la paroi inférieure (204), et **en ce que** la paroi supérieure (202) se plaque à l'extérieur contre la troisième paroi latérale (160c) de la pièce intermédiaire (156).

2. Système d'attache moteur (150) selon la revendication 1, **caractérisé en ce que** chaque paroi latérale (206a-b) du mât réacteur (152) se positionne entre les parois latérales (160a-d) de la pièce intermédiaire (156), et **en ce que** la paroi inférieure (204) se plaque à l'extérieur contre la quatrième paroi latérale (160d) de la pièce intermédiaire (156).

3. Système d'attache moteur (150) selon la revendication 1, **caractérisé en ce que** chaque paroi latérale (206a-b) du mât réacteur (152) se positionne à l'extérieur des parois latérales (160a-d) de la pièce intermédiaire (156), **en ce que** la paroi supérieure (202) se plaque également à l'extérieur contre le premier rabat, et **en ce que** la paroi inférieure (204) se plaque à l'extérieur contre le deuxième rabat.

4. Système d'attache moteur (150) selon l'une des revendications précédentes, **caractérisé en ce que** chaque bielle (304a-b), la poutre (302) et la pièce intermédiaire (156) définissent en combinaison un chemin primaire d'efforts entre le moteur (102) et le mât réacteur (152) pour supporter les charges du moteur, **en ce qu'**il comporte pour chaque bielle (304a-b), un point de fixation de sécurité en attente (314a-b) activé en cas de défaillance du chemin primaire d'efforts et qui crée un chemin auxiliaire d'efforts entre le moteur et le mât réacteur, et **en ce que** les deux points de fixation de sécurité en attente (314a-b) sont disposés de part et d'autre du plan médian (XZ).

5. Système d'attache moteur (150) selon la revendication 4, **caractérisé en ce que** chaque point de fixation de sécurité en attente (314a-b) est constitué d'une chape réalisée dans le moteur (102) et d'un axe (316a-b) emmanché dans ladite chape et qui traverse un alésage de la poutre (302) dont le diamètre est supérieur au diamètre de l'axe (316a-b).

6. Aéronef (100) comportant une structure, un moteur (102) et un système d'attache moteur (150) selon l'une des revendications précédentes, où le mât réacteur (152) est fixé à la structure, et où une partie avant du moteur (102) est fixée auxdites autres extrémités des bielles (304a-b).

## Patentansprüche

1. Triebwerksbefestigungssystem (150) für ein Triebwerk (102) eines Luftfahrzeugs (100), wobei das Triebwerksbefestigungssystem (150) aufweist:
- einen Triebwerkspylon (152), der eine obere Wand (202), eine untere Wand (204) und auf jeder Seite eine Seitenwand (206a-b) aufweist, welche zusammen eine Stirnseite am vorderen Teil des Triebwerkspylons (152) begrenzen, und
- eine vordere Triebwerskaufhängung (154), die einen Träger (302) aufweist, an welchem beiderseits einer Mittelebene je eine Gelenkstange (304a-b) befestigt ist, wobei jede Gelenkstange (304a-b) mit einem ihrer Enden gelenkig an dem Träger (302) befestigt ist und dazu bestimmt ist, mit dem anderen ihrer Enden gelenkig am Triebwerk (102) befestigt zu werden,
- ein Zwischenteil (156), welches die Form einer Schüssel mit einer Bodenwand (158) und vier Seitenwänden (160a-d), welche sich um die Bodenwand (158) herum erstrecken, aufweist,
wobei der Träger (302) an einer Außenseite der Bodenwand (158) befestigt wird, wobei das Zwischenteil (156) an der Stirnseite des Triebwerkspylons (152) eingreift, derart, dass eine Unterseite der Bodenwand (158) an der Stirnseite des Triebwerkspylons (152) zur Anlage kommt, dass eine erste Seitenwand (160a) des Zwischenteils (156) an einer Seitenwand (206a) des Triebwerkspylons (152) zur Anlage kommt, dass eine zweite Seitenwand (160b) des Zwischenteils (156) an der anderen Seitenwand (206b) des Triebwerkspylons (152) zur Anlage kommt, dass eine dritte Seitenwand (160c) des Zwischenteils (156) an der oberen Wand (202) des Triebwerkspylons (152) zur Anlage kommt, dass eine vierte Seitenwand (160d) des Zwischenteils (156) an der unteren Wand (204) des Triebwerkspylons (152) zur Anlage kommt, und wobei jede Seitenwand (160a-d) des Zwischenteils (156) und die zugehörige Wand (202, 204, 206a-b) des Triebwerkspylons (152) aneinander befestigt sind,
wobei das Triebwerksbefestigungssystem (150) **dadurch gekennzeichnet ist, dass** jede Seitenwand (206a-b) des Triebwerkspylons (152) die Form eines zum Inneren des Triebwerkspylons (152) hin offenen "U" annimmt und einen Boden, welcher die Seitenwand bildet, eine erste Lasche, welche sich parallel zur oberen Wand (202) erstreckt, und eine zweite Lasche, welche sich parallel zur unteren Wand (204) erstreckt, aufweist, und dadurch, dass sich die obere Wand (202) außen an die dritte Seitenwand (160c) des Zwischenteils (156) anpresst.

2. Triebwerksbefestigungssystem (150) nach Anspruch 1, **dadurch gekennzeichnet, dass** jede Seitenwand (206ab) des Triebwerkspylons (152) zwischen den Seitenwänden (160a-d) des Zwischenteils (156) positioniert ist, und dadurch, dass sich die untere Wand (204) außen an die vierte Seitenwand (160d) des Zwischenteils (156) anpresst.

3. Triebwerksbefestigungssystem (150) nach Anspruch 1, **dadurch gekennzeichnet, dass** jede Seitenwand (206ab) des Triebwerkspylons (152) außerhalb der Seitenwände (160a-d) dlnes Zwischenteils (156) positioniert ist, dadurch, dass sich die obere Wand (202) ebenfalls außen an die erste Lasche anpresst, und dass sich die untere Wand (204) außen an die zweite Lasche anpresst.

4. Triebwerksbefestigungssystem (150) nach einem der vorhergehenden Ansprüche, **dadurch gekennzeichnet, dass** jede Gelenkstange (304a-b), der Träger (302) und das Zwischenteil (156) in der Kombination einen primären Kraftweg zwischen dem Triebwerk (102) und dem Triebwerkspylon (152) definieren, um die Lasten des Triebwerks aufzunehmen, dadurch, dass es für jede Gelenkstange (304a-b) einen bereitstehenden Sicherheitsbefestigungspunkt (314a-b) aufweist, welcher im Fall eines Ausfalls des primären Kraftweges aktiviert wird und welcher einen Hilfskraftweg zwischen dem Triebwerk und dem Triebwerkspylon herstellt, und dadurch, dass die zwei bereitstehenden Sicherheitsbefestigungspunkte (314a-b) beiderseits der Mittelebene (XZ) angeordnet sind.

5. Triebwerksbefestigungssystem (150) nach Anspruch 4, **dadurch gekennzeichnet, dass** jeder bereitstehende Sicherheitsbefestigungspunkt (314a-b) aus einer Öse besteht, die am Triebwerk (102) ausgebildet ist, und aus einem Bolzen (316a-b), der in die Öse eingesteckt wird und der eine Bohrung des Trägers (302) durchquert, deren Durchmesser größer als der Durchmesser des Bolzens (316a-b) ist.

6. Luftfahrzeug (100), welches eine Struktur, ein Triebwerk (102) und ein Triebwerksbefestigungssystem (150) nach einem der vorhergehenden Ansprüche aufweist, wobei der Triebwerkspylon (152) an der Struktur befestigt ist und wobei ein vorderer Teil des Triebwerks (102) an den anderen Enden der Gelenkstangen (304a-b) befestigt ist.

## Claims

1. Engine attachment system (150) for an engine (102) of an aircraft (100), the engine attachment system (150) comprising:
- a reactor pylon (152) comprising an upper wall (202), a lower wall (204) and, on either side, a lateral wall (206a-b) together delimiting a front face at the forward part of the reactor pylon (152), and
- a forward engine attachment (154) comprising a beam (302) to which is fixed, on either side of a median plane, a connecting rod (304a-b), each connecting rod (304a-b) being fixed in an articulated manner via one of the ends thereof to the beam (302) and being designed to be fixed in an articulated manner via the other of the ends thereof to the engine (102),
- an intermediate component (156) that takes the form of a dish with a bottom wall (158) and four lateral walls (160a-d) extending about the bottom wall (158),
wherein the beam (302) is fixed against an exterior face of the bottom wall (158), wherein the intermediate component (156) is fitted at the front face of the reactor pylon (152) such that an interior face of the bottom wall (158) abuts against the front face of the reactor pylon (152), such that a first lateral wall (160a) of the intermediate component (156) bears against a lateral wall (206a) of the reactor pylon (152), such that a second lateral wall (160b) of the intermediate component (156) bears against the other lateral wall (206b) of the reactor pylon (152), such that a third lateral wall (160c) of the intermediate component (156) bears against the upper wall (202) of the reactor pylon (152), such that a fourth lateral wall (160d) of the intermediate component (156) bears against the lower wall (204) of the reactor pylon (152), and wherein each lateral wall (160a-d) of the intermediate component (156) and the associated wall (202, 204, 206a-b) of the reactor pylon (152) are fixed to one another,
the engine attachment system (150) being **characterized in that** each lateral wall (206a-b) of the reactor pylon (152) takes the form of a U that is open towards the interior of the reactor pylon (152) and comprises a bottom that constitutes the lateral wall, a first flange that extends parallel to the upper wall (202) and a second flange that extends parallel to the lower wall (204), and **in that** the upper wall (202) is placed externally against the third lateral wall (160c) of the intermediate component (156).

2. Engine attachment system (150) according to Claim 1, **characterized in that** each lateral wall (206a-b) of the reactor pylon (152) is positioned between the lateral walls (160a-d) of the intermediate component (156), and **in that** the lower wall (204) is placed externally against the fourth lateral wall (160d) of the intermediate component (156).

3. Engine attachment system (150) according to Claim 1, **characterized in that** each lateral wall (206a-b) of the reactor pylon (152) is positioned on the exterior of the lateral walls (160a-d) of the intermediate component (156), **in that** the upper wall (202) is placed likewise on the exterior against the first flange, and **in that** the lower wall (204) is placed externally against the second flange.

4. Engine attachment system (150) according to one of the preceding claims, **characterized in that** each connecting rod (304a-b), the beam (302) and the intermediate component (156) in combination define a primary path of forces between the engine (102) and the reactor pylon (152) to withstand the loads of the engine, **in that** it comprises, for each connecting rod (304a-b), a standby safety fixing point (314a-b) activated in the event of failure of the primary path of forces and that creates an auxiliary path of forces between the engine and the reactor pylon, and **in that** the two standby safety fixing points (314a-b) are arranged on either side of the median plane (XZ).

5. Engine attachment system (150) according to Claim 4, **characterized in that** each standby safety fixing point (314a-b) is constituted by a plate formed in the engine (102) and by a pin (316a-b) fitted into said plate and which traverses a bore of the beam (302), the diameter of which is greater than the diameter of the pin (316a-b).

6. Aircraft (100) comprising a structure, an engine (102) and an engine attachment system (150) according to one of the preceding claims, wherein the reactor pylon (152) is fixed to the structure, and wherein a forward part of the engine (102) is fixed to said other ends of the connecting rods (304a-b).
